# EUROPÄISCHE PATENTANMELDUNG

(11) **EP 4 108 369 A1**
(43) Veröffentlichungstag der Anmeldung: **28.12.2022**
(21) Anmeldenummer: 21181628.5
(22) Anmeldetag: 25.06.2021
(51) Int. Cl.: B23B 51/10

(54) **BEGRENZUNGSVORRICHTUNG**

(71) Anmelder: KOMET Deutschland GmbH, 74354 Besigheim (DE); CERATIZIT Balzheim GmbH & Co. KG, 88481 Balzheim (DE)
(72) Erfinder: HOERL, Roland, 74354 Besigheim (DE); WIRTH, Philipp, 88481 Balzheim (DE); WYLEZUCH, Adrian, 88481 Balzheim (DE)
(74) Vertreter: Ciesla, Dirk

(57) **Zusammenfassung**

Es wird eine Begrenzungsvorrichtung (1, 300) zur Begrenzung einer Eindringtiefe von einem Schneidkopf (4) in ein Werkstück bereitgestellt, wobei die Begrenzungsvorrichtung (1, 300) eine Anschlagshülse (2, 201), einen Hülsenträger (3) und einen Schneidkopf (4) hat, wobei die Anschlagshülse (2, 201) eine Anschlagsseite (2a) zum Aufsetzen auf eine Werkstückfläche hat, wobei der Hülsenträger (3) relativ zur Anschlagshülse (2, 201) bezüglich einer Drehachse (5) drehbar gelagert ist, in einer axialen Position bezüglich der Drehachse (5) relativ zur Anschlagshülse (2, 201) fixiert ist und die Anschlagshülse (2, 201) trägt, wobei der Schneidkopf (4) unter einer Schneidkopfdrehung bezüglich der Drehachse (5) mit dem Hülsenträger (3) mitdreht und mindestens eine Schneidkante (4a) hat, wobei der Hülsenträger (3) eine Positionierfläche (3a) hat, wobei die Positionierfläche (3a) quer zur Drehachse (5) aufseiten der Anschlagsseite (2a) angeordnet ist, wobei der Schneidkopf (4) die Positionierfläche (2a) kontaktiert.

## Beschreibung

Die vorliegende Erfindung betrifft eine Begrenzungsvorrichtung zur Begrenzung einer Eindringtiefe von einem Schneidkopf in ein Werkstück, wobei die Begrenzungsvorrichtung eine Anschlagshülse, einen Hülsenträger und einen Schneidkopf hat, wobei die Anschlagshülse eine Anschlagsseite zum Aufsetzen auf eine Werkstückfläche hat, wobei der Hülsenträger relativ zur Anschlagshülse bezüglich einer Drehachse drehbar gelagert ist, in einer axialen Position bezüglich der Drehachse relativ zur Anschlagshülse fixiert ist und die Anschlagshülse trägt, wobei der Schneidkopf unter einer Schneidkopfdrehung bezüglich der Drehachse mit dem Hülsenträger mitdreht und mindestens eine Schneidkante hat, wobei die Schneidkante aufseiten der Anschlagsseite zum Schneiden außerhalb von der Anschlagshülse angeordnet und ausgebildet ist.

Die DE 10 2014 115 768 B3 zeigt einen mit einem Senkwerkzeug ausgerüsteten Anschlag.

Bei dem aus der DE 10 2014 115 768 B3 bekannten Anschlag besteht das Bedürfnis, das Senkwerkzeug unter einem geringeren Aufwand relativ zum Anschlag präzise zu positionieren.

Die Aufgabe der vorliegenden Erfindung besteht darin, eine Begrenzungsvorrichtung bereitzustellen, mit der ein Schneidkopf einfach und zugleich präzise in eine Schneidposition relativ zur Anschlagshülse gebracht wird.

Die technische Aufgabe der vorliegenden Erfindung wird gelöst durch den Gegenstand von Anspruch 1. Vorteilhafte Weiterbildungen der Erfindung sind den abhängigen Ansprüchen, die untereinander frei kombinierbar sind, und den beigefügten Figuren zu entnehmen.

Gemäß der vorliegenden Erfindung hat die Begrenzungsvorrichtung zur Begrenzung einer Eindringtiefe von einem Schneidkopf in ein Werkstück eine Anschlagshülse, einen Hülsenträger und einen Schneidkopf, wobei die Anschlagshülse eine Anschlagsseite zum Aufsetzen auf eine Werkstückfläche hat, wobei der Hülsenträger relativ zur Anschlagshülse bezüglich einer Drehachse drehbar gelagert ist, in einer axialen Position bezüglich der Drehachse relativ zur Anschlagshülse fixiert ist und die Anschlagshülse trägt, wobei der Schneidkopf unter einer Schneidkopfdrehung bezüglich der Drehachse mit dem Hülsenträger mitdreht und mindestens eine Schneidkante hat, wobei die Schneidkante aufseiten der Anschlagsseite zum Schneiden außerhalb von der Anschlagshülse angeordnet und ausgebildet ist, wobei der Hülsenträger eine Positionierfläche hat, wobei die Positionierfläche quer zur Drehachse aufseiten der Anschlagsseite angeordnet ist, wobei der Schneidkopf die Positionierfläche kontaktiert.

Die Positionierfläche sorgt dafür, dass die Schneidkante in einer axialen Position bezüglich der Drehachse relativ zur Anschlagshülse gegen eine Bewegung in die Anschlagshülse hinein fixiert wird. Der Schneidkopf wird dadurch einfach und zugleich präzise in eine Schneidposition relativ zur Anschlagshülse gebracht.

So wird die Schneidposition bei der Montage von dem Schneidkopf dann erreicht, wenn der Schneidkopf die Positionierfläche kontaktiert. Die axiale Position von der Positionierfläche legt damit die axiale Position von dem Schneidkopf relativ zur Anschlagshülse fest, so dass die Schneidposition besonders präzise festgelegt wird. So ist es lediglich erforderlich, den Abstand von der Positionierfläche zur Anschlagsseite einmal festzulegen, um sicherstellen zu können, dass der Schneidkopf auch bei einer mehrfachen Montage präzise positioniert wird.

Die Positionierfläche ist vorzugsweise eben ausgebildet und senkrecht zur Drehachse angeordnet, weil dies die Positionierung des Schneidkopfs noch präziser macht, indem die Positionierung von einer Drehlage des Schneidkopfs bezüglich der Drehachse unabhängig ist.

Mit dem Begriff "quer zur Drehachse" ist gemeint, dass die Positionierfläche in einem Längsschnitt, der die Drehachse enthält, einen Winkel mit der Drehachse bildet, wobei der Winkel im Bereich 105° bis 75°, einschließlich 90°, liegt und aufseiten des Hülsenträgers bemessen ist.

Indem der Hülsenträger in der axialen Position bezüglich der Drehachse relativ zur Anschlagshülse fixiert ist, wird damit auch die Positionierfläche in gleicherweise axial fixiert. Die Fixierung des Hülsenträgers kann kraftschlüssig und/oder formschlüssig mit einem weiteren Bauteil von der Begrenzungsvorrichtung erfolgen.

Der Schneidkopf hat vorzugsweise eine Gegenfläche, wobei die Gegenfläche von der Anschlagsseite abgewandt ist, der Positionierfläche folgend ausgebildet ist und die Positionierfläche kontaktiert. Dadurch wird der Kontaktbereich zwischen der Positionierfläche und dem Schneidkopf vergrößert.

Mit der Drehachse ist eine virtuelle Drehachse gemeint, die durch das Innere von jeweils dem Hülsenträger und der Anschlagshülse verläuft, wobei sich der Hülsenträger und die Anschlagshülse jeweils längs von der Drehachse erstrecken.

Die Anschlagshülse ist vorzugsweise ein monolithisches Bauteil, weil ein solches Bauteil einfach herzustellen ist.

Der Hülsenträger ist vorzugsweise ein monolithisches Bauteil, weil ein solches Bauteil einfach herzustellen ist.

Vorzugsweise ist der Hülsenträger als Hülse ausgebildet, weil dadurch ein Wellenelement in den Hülsenträger zum Antrieb von dem Schneidkopf eingesteckt werden kann, wodurch die axiale Baulänge von dem Hülsenträger reduziert wird.

Gemäß einer Weiterbildung hat der Hülsenträger einen Einsteckraum und eine Hülsenträgerwandung, wobei die Hülsenträgerwandung den Einsteckraum zumindest abschnittsweise umfänglich bezüglich der Drehachse umgibt, wobei der Schneidkopf abschnittsweise in den Einsteckraum eingesteckt ist, wobei die Positionierfläche eine Fläche von der Hülsenträgerwandung ist. Die Hülsenträgerwandung verbessert den Halt von dem Schneidkopf in der Schneidposition unter Belastungen quer zur Drehachse und stellt die Positionierfläche bauraumsparend bereit.

Gemäß einer Weiterbildung ist die Positionierfläche eine Stirnfläche von der Hülsenträgerwandung. So befindet sich die Positionierfläche an einer aufseiten der Anschlagsseite leicht zugänglichen Stelle, was jeweils die Inspektion und Wartung der Positionierfläche zugunsten einer präzisen Positionierung von dem Schneidkopf verbessert. Die Stirnfläche von der Hülsenträgerwandung ist vorzugsweise bezüglich der Drehachse kreisförmig geschlossen ausgebildet.

Gemäß einer Weiterbildung hat die Begrenzungsvorrichtung ein Antriebswellenelement, wobei das Antriebswellenelement jeweils in den Hülsenträger und den Schneidkopf eingesteckt ist, so dass das Antriebswellenelement den Schneidkopf in die Schneidkopfdrehung versetzen kann, wobei das Antriebswellenelement einen Gewindeabschnitt hat, wobei der Gewindeabschnitt mit dem Schneidkopf in einem Gewindeeingriff steht. Das Antriebswellenelement sorgt aufgrund des Gewindeabschnitts dafür, dass der Schneidkopf gegen eine axiale Bewegung bezüglich der Drehachse weg von der Anschlagshülse fixiert ist. Das Antriebswellenelement ist bezüglich des Schneidkopfs ein separates Bauteil. Vorzugsweise ist das Antriebswellenelement reversibel lösbar jeweils in den Hülsenträger und den Schneidkopf eingesteckt, weil dies den Austausch von dem Antriebswellenelement leichter macht.

Gemäß einer Weiterbildung hat das Antriebswellenelement einen Gewindekopf aufseiten der Anschlagsseite, wobei der Gewindeabschnitt im Bereich des Gewindekopfs ausgebildet ist. So reicht aufseiten des Schneidkopfs eine relative kurze Innenbohrung mit einem dem Gewindeabschnitt folgenden Innengewinde aus, um den Schneidkopf bezüglich der Drehachse axial zu sichern und so den Kontakt zwischen der Positionierfläche und dem Schneidkopf auch unter axialen Belastungen bezüglich der Drehachse zu halten. Ohne Gewindekopf müsste das Antriebswellenelement in den Schneidkopf tiefer eingeführt werden, um den Gewindeabschnitt mit dem Schneidkopf in Eingriff zu bringen, was den Schneidkopf strukturell schwächen würde.

Gemäß einer Weiterbildung hat die Schneidkante einen ersten bezüglich der Drehachse radial bemessenen Schneidflugkreis, wobei der erste Schneidflugkreis außerhalb der Anschlagshülse aufseiten der Anschlagsseite angeordnet ist, wobei die Schneidkante einen zweiten bezüglich der Drehachse radial bemessenen Schneidflugkreis hat, wobei der erste Schneidflugkreis kleiner ist als der zweite Schneidflugkreis, wobei der zweite Schneidflugkreis einen parallel zur Drehachse bemessenen Flugkreisabstand zur Positionierfläche hat, wobei die Anschlagsseite einen parallel zur Drehachse bemessenen Anschlagsabstand zur Positionierfläche hat, wobei der Flugkreisabstand von dem zweiten Flugkreis und der Anschlagsabstand gleich groß sind. Indem der Schneidkopf die Positionierfläche kontaktiert, wird sichergestellt, dass der Flugkreisabstand von dem zweiten Flugkreis und der Anschlagsabstand gleich groß sind. Die Schneidposition wird nach dieser Weiterbildung durch den Flugkreisabstand von dem zweiten Flugkreis definiert. Mit Vorteil entfällt eine nachträgliche Messung, ob der Flugkreisabstand von dem zweiten Flugkreis nach der Montage von dem Schneidkopf wie vorgegeben eingehalten wird. Der Flugkreisabstand von dem zweiten Flugkreis wird eingehalten, sobald der Schneidkopf die Positionierfläche kontaktiert.

Gemäß einer Weiterbildung verläuft die Schneidkante zwischen dem ersten Schneidflugkreis und dem zweiten Schneidflugkreis gerade oder gekrümmt. Dadurch kann der Schneidkopf unter der Schneidkopfdrehung eine dem Verlauf der Schneidkante folgende Fase in ein Werkstück erzeugen. Weil die beiden Schneidflugkreise durch die Positionierfläche präzise in Position bezüglich der Anschlagsseite gehalten werden, kann ein Fasenöffnungswinkel in gleicherweise präzise beibehalten werden. Der Fasenöffnungswinkel wird in einem Längsschnitt von der Begrenzungsvorrichtung bemessen, wobei die Drehachse in dem Längsschnitt liegt, die Drehachse ein virtueller Schenkel von dem Fasenöffnungswinkel aufseiten des Hülsenträgers ist und die Schneidkante im Bereich zwischen den beiden Schneidflugkreisen der andere Schenkel von dem Fasenöffnungswinkel aufseiten des Hülsenträgers ist, wobei der Fasenöffnungswinkel aufseiten des Hülsenträgers bemessen ist. Der Fasenöffnungswinkel liegt vorzugsweise im Bereich von 5° bis 85°, weil dieser Bereich für das Absenken üblicher Schraubenköpfe besonders zweckmäßig ist.

Gemäß einer Weiterbildung hat die Begrenzungsvorrichtung mehrere Mitnehmer, wobei die Mitnehmer im Bereich der Hülsenträgerwandung aufseiten des Einsteckraums angeordnet sind, wobei mindestens zwei Mitnehmer von den Mitnehmern den Schneidkopf zur Drehmitnahme kontaktieren. Die Mitnehmer sorgen dafür, dass der Hülsenträger mit dem Schneidkopf präziser drehgekoppelt ist. Die Mitnehmer ragen in den Einsteckraum hinein, vorzugsweise im Bereich der Anschlagshülse.

Gemäß einer Weiterbildung ist mindestens ein Mitnehmer von den Mitnehmern ein monolithischer Abschnitt von der Hülsenträgerwandung. Dadurch wird der Mitnehmer, welcher ein monolithischer Abschnitt von der Hülsenträgerwandung ist, besonders gut gegen eine radiale Verstellung bezüglich der Drehachse gesichert, was die Drehübertragung noch stabiler macht, insbesondere unter Schwingungen von der Begrenzungsvorrichtung. Dementsprechend ist es besonders vorteilhaft, wenn mindestens drei Mitnehmer von den Mitnehmer jeweils als monolithischer Abschnitt von der Hülsenträgerwandung ausgebildet und angeordnet sind, denn dadurch kann die Drehmitnahme statisch bestimmt erfolgen.

Gemäß einer Weiterbildung hat die Hülsenträgerwandung in Umfangsrichtung bezüglich der Drehachse mehrere konkav gekrümmte Zentrierabschnitte, wobei mindestens zwei Zentrierabschnitte von den Zentrierabschnitten den Schneidkopf bezüglich der Drehachse zentrieren. Die Zentrierabschnitte können jeweils in derselben Umfangsrichtung, d. h. in Blickrichtung auf die Anschlagsseite im Uhrzeigersinn oder gegen den Uhrzeigersinn, bezüglich der Drehachse jeweils einer Spirale abschnittsweise folgen, wobei jede Spirale ein Zentrum hat, welches jeweils auf der Drehachse liegt. So nimmt der Abstand von jedem Zentrierabschnitt zur Drehachse zu, wenn der Spirale in einem Spiralsinn weg von dem Spiralzentrum gefolgt wird. Die solchermaßen spiralisierten Zentrierabschnitte können den Schneidkopf unter einer Klemmwirkung zentrieren, indem der Schneidkopf unter einem Kontakt mit mindestens zwei Zentrierabschnitten von den Zentrierabschnitten gegen den Spiralsinn gedreht wird. Vorzugsweise folgen die Zentrierabschnitte dabei jeweils einer archimedischen Spirale, weil eine solche Spirale einen sanften und damit schonenden Anstieg der Klemmkräfte bereitstellt, was die Belastung der Hülsenträgerwandung reduziert.

Die Zentrierabschnitte können aber auch jeweils einem Kreis folgen, wobei jeder Kreis ein Zentrum hat, welches auf der Drehachse liegt. Solche Zentrierabschnitte sind besonders einfach herzustellen.

Die Zentrierabschnitte können in einem Längsschnitt, in welchem die Drehachse liegt, jeweils paarweise gegenüberliegend eine V-Form bilden, wobei eine virtuelle Spitze von der V-Form der Anschlagsseite abgewandt ist. Der Schneidkopf lässt sich dadurch in axialer Richtung in die Zentrierabschnitte reversibel lösbar einspannen.

Gemäß einer Weiterbildung sind die Zentrierabschnitte und die Mitnehmer in einem Querschnitt senkrecht zur Drehachse in Umfangsrichtung bezüglich der Drehachse zueinander alternierend abwechselnd angeordnet. Die Mitnehmer und die Zentrierabschnitt haben dadurch jeweils einen Wirkungsbereich, der in demselben Querschnitt liegt, was die axiale Baulänge von dem Hülsenträger bezüglich der Drehachse reduziert.

Gemäß einer Weiterbildung sind mindestens drei Mitnehmer von den Mitnehmern und mindestens drei Zentrierabschnitte von den Zentrierabschnitten vorgesehen, wobei der Schneidkopf in dem Querschnitt eine Außenkontur aufseiten der Hülsenträgerwandung hat, wobei die Außenkontur die Form von einem Dreieck mit geraden Kanten und mit abgerundeten Ecken hat, wobei jede Ecke von den Ecken jeweils einen Zentrierabschnitt kontaktiert, wobei jede Kante von den Kanten jeweils einen Mitnehmer von den Mitnehmern kontaktiert. Dies ist eine besonders zweckmäßige Weiterbildung, weil die solchermaßen jeweils vorgesehenen drei Mitnehmer und drei Zentrierabschnitte für eine statisch bestimmte Drehmitnahme beziehungsweise Zentrierung von dem Schneidkopf sorgen, so dass die Drehmitnahme von dem Schneidkopf und die Zentrierung jeweils besonders präzise bereitgestellt werden.

Gemäß einer Weiterbildung hat das Antriebwellenelement einen bezüglich der Drehachse radial vorspringenden Wellenvorsprung, wobei der Hülsenträger zwischen dem Schneidkopf und dem Wellenvorsprung angeordnet ist, wobei der Hülsenträger den Wellenvorsprung unter einer durch den Schneidkopf aufgebrachten axialen Vorspannung kontaktiert. Der Wellenvorsprung fixiert den Hülsenträger in axialer Richtung bezüglich der Drehachse relativ zum Antriebswellenelement.

Gemäß einer Weiterbildung hat die Begrenzungsvorrichtung eine Drehlagereinheit, wobei die Drehlagereinheit einen inneren Lagerring, einen äußeren Lagerring und mehrere Wälzkörper hat, wobei der Hülsenträger den inneren Lagerring bezüglich der Drehachse synchron mitdrehbar trägt, wobei die Anschlagshülse den äußeren Lagerring bezüglich der Drehachse synchron mitdrehbar trägt, wobei die Wälzkörper zwischen dem inneren Lagerring und dem äußeren Lagerring angeordnet sind, wobei die Wälzkörper jeweils den inneren Lagerring und den äußeren Lagerring kontaktieren. Die Drehlagereinheit reduziert die Reibung zwischen der Anschlagshülse und dem Hülsenträger unter der Schneidkopfdrehung. Der innere Lagerring, der äußere Lagerring und die Wälzkörper bilden vorzugsweise ein Radiallager bezüglich der Drehachse. Die Wälzkörper können jeweils als Kugeln, Zylinder oder Kegel ausgebildet sein.

Die Begrenzungsvorrichtung hat vorzugsweise eine weitere Drehlagereinheit, wobei die weitere Drehlagereinheit von der Drehlagereinheit bezüglich der Drehachse axial beabstandet ist, wobei die weitere Drehlagereinheit einen weiteren inneren Lagerring, einen weiteren äußeren Lagerring und mehrere weitere Wälzkörper hat, wobei der Hülsenträger den weiteren inneren Lagerring bezüglich der Drehachse synchron mitdrehbar trägt, wobei die Anschlagshülse den weiteren äußeren Lagerring bezüglich der Drehachse synchron mitdrehbar trägt, wobei die weiteren Wälzkörper zwischen dem weiteren inneren Lagerring und dem weiteren äußeren Lagerring angeordnet sind, wobei die weiteren Wälzkörper jeweils den weiteren inneren Lagerring und den weiteren äußeren Lagerring kontaktieren. Die weitere Drehlagereinheit ist vorzugsweise der Drehlagereinheit analog aufgebaut. Die weitere Drehlagereinheit macht die drehbare Lagerung von dem Hülsenträger bezüglich von Biegebelastungen quer zur Drehachse stabiler.

Gemäß einer Weiterbildung hat die Begrenzungsvorrichtung eine Führungshülse, wobei die Anschlagshülse in die Führungshülse eingesteckt ist, wobei die Führungshülse mit der Anschlagshülse bezüglich der Drehachse synchron mitdrehbar verbunden ist, wobei die Führungshülse aufseiten der Anschlagsseite eine Führungsanschlagsseite hat, wobei die Führungshülse bezüglich der Drehachse relativ zur Anschlagshülse axial verschiebbar gelagert ist, so dass die Führungshülse von einer Ausgangsposition in eine Endposition verstellbar ist, wobei die Führungsanschlagsseite in der Ausgangsposition in axialer Richtung bezüglich der Drehachse über die Anschlagsseite hinausragt, wobei die Führungsanschlagsseite in der Endposition mit der Anschlagsseite zumindest abschnittsweise bündig abschließt, wobei die Führungshülse unter einer Bewegung von der Ausgangsposition in die Endposition unter einer axialen Vorspannung steht. Die Führungshülse sorgt dafür, dass die Anschlagshülse einen Kontakt von der Anschlagsseite mit der Werkstückfläche stabiler erreicht, weil die Führungsanschlagsseite die Werkstückoberfläche vor der Anschlagsseite kontaktiert. So wird die Führungsanschlagsseite zum Bespiel zentrisch über eine Bohrung unter einem Kontakt von der Führungsanschlagsseite mit einem die Bohrung umgebenden Bereich positioniert. Diese Positionierung positioniert die Anschlagsseite in gleicherweise zentrisch, so dass der Schneidkopf die Bohrung zentrisch bearbeiten kann.

Gemäß einer Weiterbildung hat die Anschlagshülse mindestens eine Ausrichtbohrung und hat der Hülsenträger eine Ausrichtbohrung, wobei die Ausrichtbohrung von der Anschlagshülse die Anschlagshülse unterbricht und mit der Ausrichtbohrung von dem Hülsenträger unter einer Drehung von der Anschlagshülse bezüglich der Drehachse relativ zum Hülsenträger in Deckung gebracht werden kann. Wenn die Ausrichtbohrungen solchermaßen in Deckung gebracht sind, kann ein Sperrelement in die Ausrichtbohrungen eingeführt werden, so dass die Drehung von der Anschlagshülse bezüglich der Drehachse relativ zum Hülsenträger gesperrt wird. In einem solchermaßen gesperrten Zustand kann der Schneidkopf besonders leicht mit dem Gewindekopf verschraubt werden. Diese Sperrung wird noch weiter verbessert, wenn die Anschlagshülse eine weitere Ausrichtbohrung hat und der Hülsenträger eine weitere Ausrichtbohrung hat, wobei die weitere Ausrichtbohrung von der Anschlagshülse mit der weiteren Ausrichtbohrung von dem Hülsenträger unter der Drehung von der Anschlagshülse bezüglich der Drehachse relativ zum Hülsenträger in Deckung gebracht werden kann. So kann ein weiteres Sperrelement zur Sperrung verwendet werden oder das Sperrelement kann stimmgabelförmig ausgebildet sein und so mit jeweils einem Stimmgabelast in die Ausrichtbohrungen eingeführt werden.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen
- Fig. 1:: eine schematische perspektivische Darstellung von einer Begrenzungsvorrichtung;
- Fig. 2:: eine schematische Darstellung einer Stirnseitenansicht von der Begrenzungsvorrichtung von Fig. 1;
- Fig. 3:: eine Schnittdarstellung gemäß den Schnittlinien A-A in Fig. 2;
- Fig. 4:: eine Schnittdarstellung gemäß den Linien B-B in Fig. 3;
- Fig. 5:: die Stirnseitenansicht von Fig. 2 ohne Schneidkopf und Anschlagshülse;
- Fig. 6:: eine schematische perspektivische Darstellung einer weiteren Begrenzungsvorrichtung.

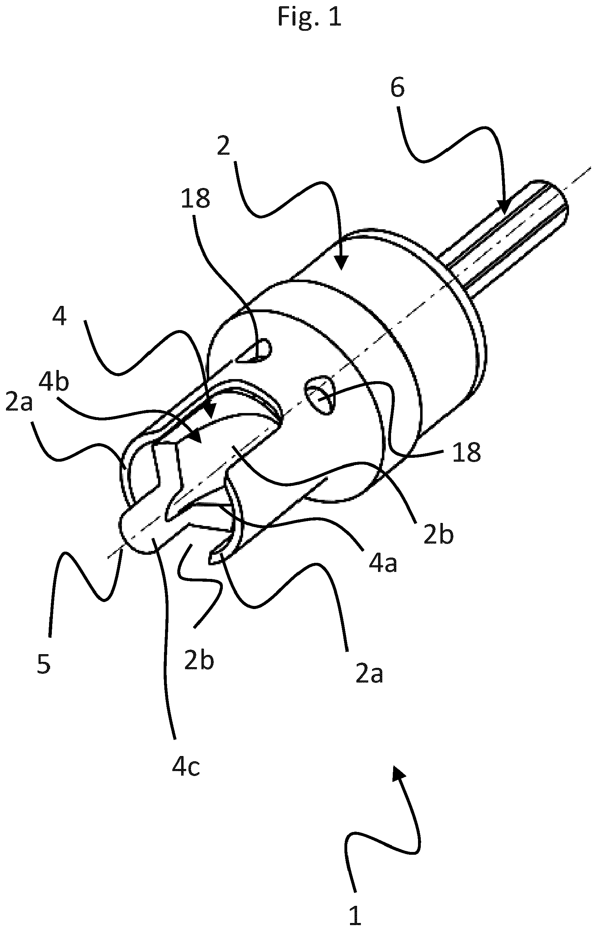

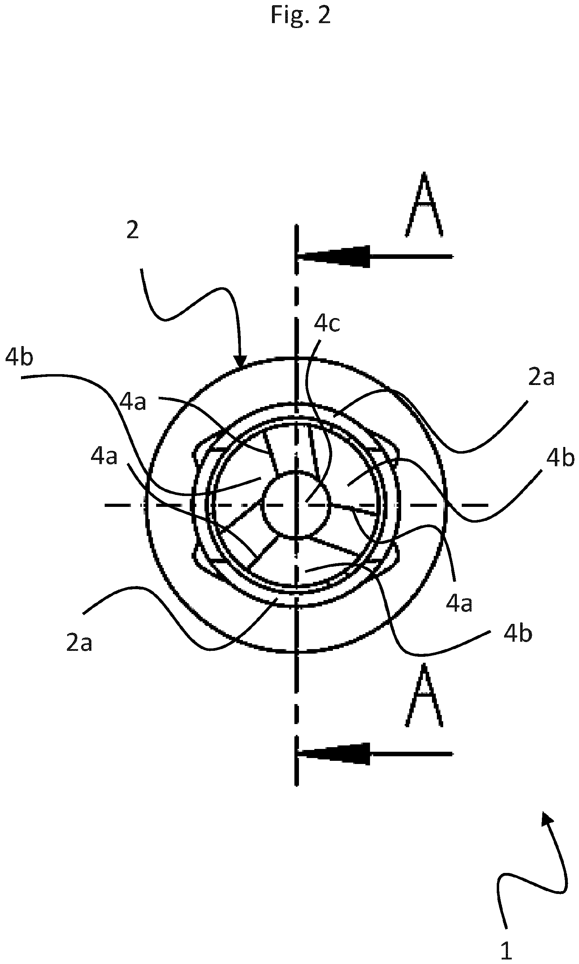

Die Figuren 1 bis 6 zeigen eine Darstellung von einer Begrenzungsvorrichtung 1.

Die Begrenzungsvorrichtung 1 hat eine Anschlagshülse 2, einen Hülsenträger 3 und einen Schneidkopf 4.

Die Anschlagshülse 2 hat eine ebene Anschlagsseite 2a zum Aufsetzen von der Anschlagshülse 2 auf eine nicht dargestellte Werkstückfläche. Die Anschlagsseite 2a ist eine ebene Stirnseite von der Anschlagshülse 2, so dass die Anschlagshülse 2 kippstabil auf die Werkstückfläche aufgesetzt werden kann. Die Anschlagshülse 2 hat zwei U-förmige Ausnehmungen 2b. Die U-förmigen Ausnehmungen 2b unterbrechen die Anschlagsseite 2a und sorgen dafür, dass Späne aus der Anschlagshülse 2 seitlich entfernt werden können. Die U-förmigen Ausnehmungen 2b verhindern damit einen Spänestau in der Anschlagshülse 2.

Der Hülsenträger 3 ist relativ zur Anschlagshülse 2 bezüglich einer Drehachse 5 drehbar gelagert und in einer axialen Position bezüglich der Drehachse 5 relativ zur Anschlagshülse 2 und damit zur Anschlagsseite 2a fixiert. Die Anschlagshülse 2 steht in einem auf die Werkstückfläche aufgesetzten Zustand still, wenn der Hülsenträger 3 bezüglich der Drehachse 5 gedreht wird.

Der Hülsenträger 3 trägt die Anschlagshülse 2 reversibel lösbar.

Der Schneidkopf 4 dreht unter einer Schneidkopfdrehung bezüglich der Drehachse 5 mit dem Hülsenträger 3 mit. Damit steht die Anschlagshülse 2 in dem auf die Werkstückfläche aufgesetzten Zustand unter der Drehung von dem Hülsenträger 3 bezüglich der Drehachse 5 auch relativ zum Schneidkopf 4 still.

Der Schneidkopf 4 hat drei Schneidkanten 4a, wobei jede Schneidkante 4a abschnittsweise aufseiten der Anschlagsseite 2a aus der Anschlagshülse 2 herausragt, so dass jede Schneidkante 4a schneidaktiv angeordnet ist. Die Schneidkanten 4a sind jeweils gerade und verlaufen jeweils unter einem Winkel bezüglich der Drehachse 5, wobei der Winkel aufseiten des Hülsenträgers 3 bemessen ist und exemplarisch 60° beträgt. Dieser Winkel kann auch als Fasenöffnungswinkel bezeichnet werden. Denn unter einem Eintritt von den Schneidkanten 4a in ein Werkstück erzeugen die Schneidkanten 4a unter der Schneidkopfdrehung eine bezüglich der Drehachse 5 umlaufende Fase.

Denkbar und auch möglich sind aber auch mehr oder weniger Schneidkanten 4a und/oder ein von 60° abweichender Fasenöffnungswinkel.

Der Schneidkopf 4 hat ferner drei Spanräume 4b. Die Spanräume 4b sind in Umfangsrichtung bezüglich der Drehachse 5 mit den Schneidkanten 4a alternierend abwechselnd angeordnet, so dass jede Schneidkante 4a einen ihr zugeordneten Spanraum 4b zur Spanabfuhr hat.

Der Schneidkopf 4 hat ferner eine Zentrierspitze 4c aufseiten der Anschlagsseite 2a. Die Zentrierspitze 4c sorgt dafür, dass der Schneidkopf 4 in eine bereits erzeugte Bohrung besser zentrisch eingeführt werden kann.

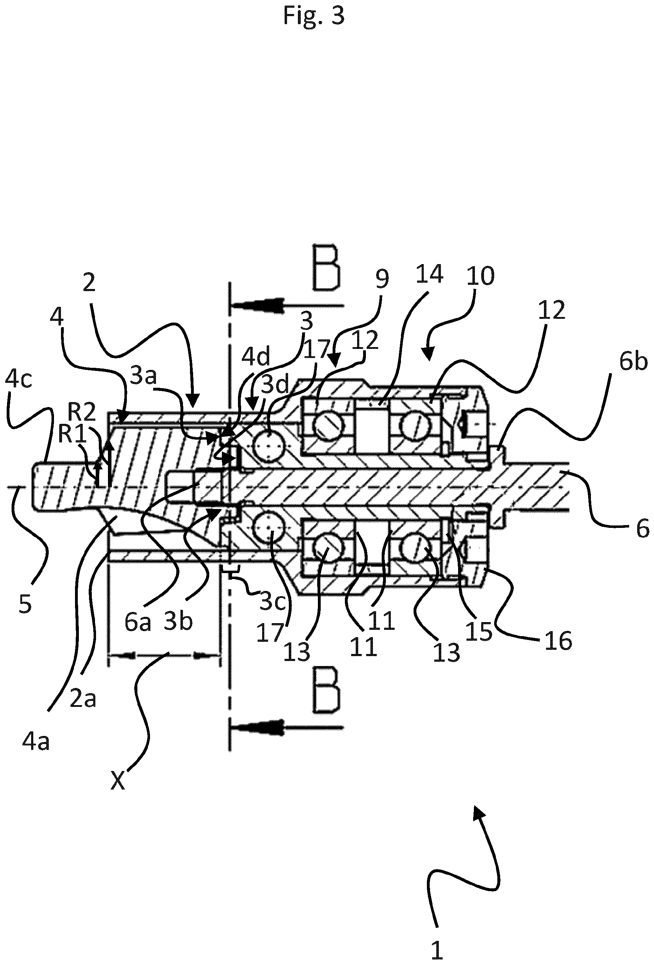

Der Schneidkopf 4 kontaktiert eine Positionierfläche 3a von dem Hülsenträger 3. Die Positionierfläche 3a sorgt dafür, dass die Schneidkanten 4a in der in Fig. 3 gezeigten axialen Position bezüglich der Drehachse 5 relativ zur Anschlagshülse 2 gegen eine Bewegung weiter in die Anschlagshülse 2 hinein fixiert sind.

Die Positionierfläche 3a ist senkrecht zur Drehachse 5 aufseiten der Anschlagsseite 2a angeordnet. Die Positionierfläche 3a ist ferner bezüglich der Drehachse 5 ringförmig geschlossen ausgebildet, hat die Drehachse 5 als zentrale Achse und ist eben ausgebildet.

Der Schneidkopf 4 hat aufseiten des Hülsenträgers 3 eine Gegenfläche 4d. Die Gegenfläche 4d ist der Positionierfläche 3a folgend ausgebildet und kontaktiert die Positionierfläche 3a.

Der Hülsenträger 3 hat einen Einsteckraum 3b und eine Hülsenträgerwandung 3c. Die Hülsenträgerwandung 3c umgibt den Einsteckraum 3b bezüglich der Drehachse 5 umfänglich geschlossen. Der Schneidkopf 4 ist abschnittsweise in den Einsteckraum 3b eingesteckt, so dass der Schneidkopf 4 seitlich stabilisiert wird. Die Positionierfläche 3a ist eine Stirnfläche von der Hülsenträgerwandung 3c aufseiten der Anschlagsseite 2a.

Der Einsteckraum 3b hat eine Bodenfläche 3d, wobei der Schneidkopf 3 einen Spalt zur Bodenfläche 3 einhält. So wird sichergestellt, dass die axiale Position von dem Schneidkopf 4 bezüglich der Drehachse 5 durch die axiale Position von der Positionierfläche 3a definiert wird. Die Bodenfläche 3d hat einen parallel zur Drehachse 5 bemessenen größeren Abstand zur Anschlagsseite 2a als die Positionierfläche 3a.

Die Begrenzungsvorrichtung 1 hat ferner ein Antriebswellenelement 6. Das Antriebswellenelement 6 ist jeweils in den Hülsenträger 3 und den Schneidkopf 4 eingesteckt, so dass das Antriebswellenelement 6 den Schneidkopf 4 in die Schneidkopfdrehung versetzt, wenn das Antriebswellenelement 6 bezüglich der Drehachse 5 drehangetrieben wird.

Das Antriebswellenelement 6 hat einen Gewindekopf 6a. Der Gewindekopf 6a ist in den Schneidkopf 4 eingeschraubt, so dass die Gegenfläche 4d in Kontakt mit der Positionierfläche 3a unter Belastungen in axialer Richtung bezüglich der Drehachse 5 weg von der Anschlagshülse 2 gehalten wird.

Das Antriebswellenelement 6 hat ferner einen bezüglich der Drehachse 5 radial vorspringenden Wellenvorsprung 6b. Der Hülsenträger 3 kontaktiert den Wellenvorsprung 6b, so dass der Hülsenträger 3 durch den Wellenvorsprung 6b axial gesichert ist.

Dass die Positionierfläche 3a für die Einhaltung der Schneidkopfposition sorgt, kommt insbesondere bezüglich der Anordnung von den Schneidkanten 4a relativ zur Anschlagsseite 2a zum Tragen.

So hat jede Schneidkante 4a einen ersten bezüglich der Drehachse 5 radial bemessenen Schneidflugkreis, dessen Radius R1 in Fig. 3 für eine Schneidkante 4a von den Schneidkanten 4a gezeigt wird. Der erste Schneidflugkreis und damit R1 sind außerhalb von der Anschlagshülse 2 freistehend angeordnet.

Jede Schneidkante 4a hat ferner einen zweiten bezüglich der Drehachse radial bemessenen Schneidflugkreis, dessen Radius R2 in Fig. 3 für eine Schneidkante 4a von den Schneidkanten 4a gezeigt wird.

Der erste Schneidflugkreis beziehungsweise R1 ist kleiner als der zweite Schneidflugkreis beziehungsweise R2. Der erste Schneidflugkreis beziehungsweise R1 und der zweite Schneidflugkreis beziehungsweise R2 haben jeweils einen parallel zur Drehachse 5 bemessenen Abstand zur Positionierfläche 3a. Der solchermaßen für den zweiten Schneidflugkreis beziehungsweise R2 bemessene Abstand ist in Fig. 3 mit dem Bezugszeichen X versehen und kann auch als Flugkreisabstand von dem zweiten Schneidflugkreis beziehungsweise R2 bezeichnet werden.

Die Positionierfläche 3a hat einen parallel zur Drehachse 5 bemessenen Abstand zur Anschlagsseite 2a, wobei die Anschlagsseite 2a und die Positionierfläche 3a jeweils senkrecht zur Drehachse 5 orientiert sind. Der solchermaßen für die Positionierfläche 3a bemessene Abstand kann auch als Anschlagsabstand bezeichnet werden, wobei der Anschlagsabstand und der Abstand X gleich groß sind, wie Fig. 3 zeigt.

Weil der zweite Schneidflugkreis beziehungsweise R2 größer ist als der erste Schneidflugkreis beziehungsweise R1, wird sichergestellt, dass eine Bohrung maximal unter dem zweiten Schneidflugkreis beziehungsweise R2 aufgebohrt wird, wenn der Schneidkopf 4 die Positionierfläche 3a kontaktiert. Sobald dieser Kontakt hergestellt ist, was einfach festgestellt werden kann, indem der Schneidkopf 4 nach dem Kontakt mit der Positionierfläche 3a nicht tiefer in die Anschlagshülse 2 hinein bewegt werden kann, lassen sich Bohrungen unter Einhaltung eines maximalen Aufbohrdurchmesser von 2 x R2 aufbohren. Ein nachträgliche axiale Vermessung von dem Schneidkopf 4a bezüglich der Anschlagshülse 2 entfällt, weil der mechanische Kontakt von der Gegenfläche 4d mit der Positionierfläche 3a ausreicht, um sicher sein zu können, dass der Abstand X eingehalten wird.

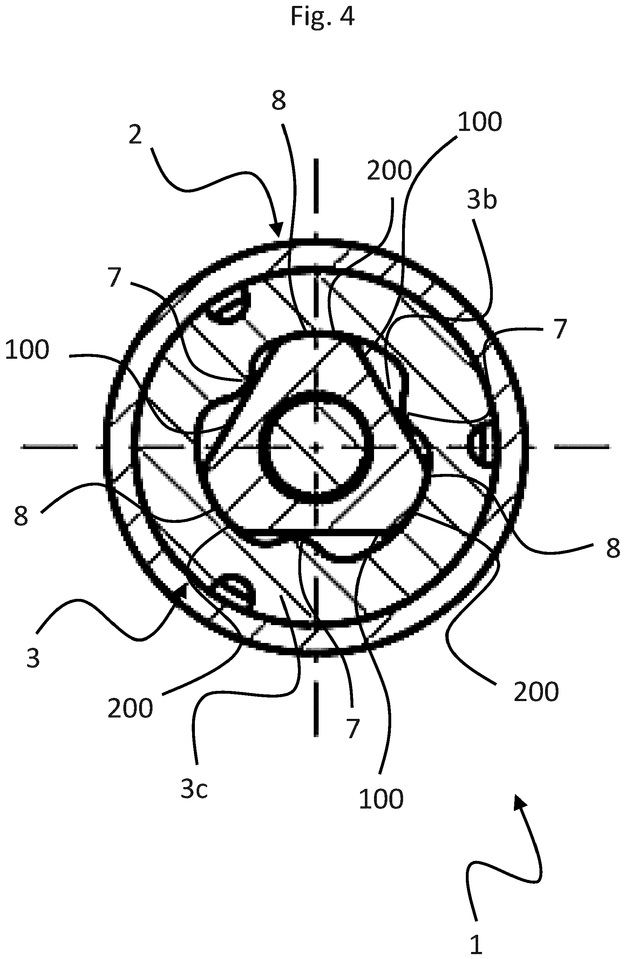

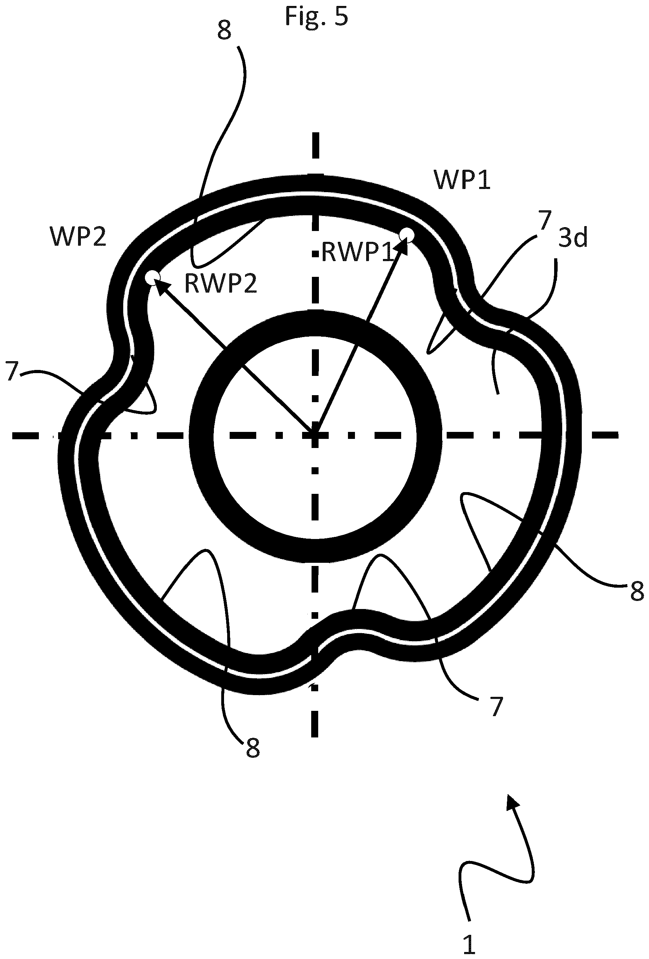

Fig. 4, eine Darstellung von einem Querschnitt senkrecht zur Drehachse 5 sowie mit Blickrichtung parallel zur Drehachse 5, und Fig. 5, eine Darstellung von der Begrenzungsvorrichtung 1 ohne Schneidkopf 4 in Blickrichtung parallel zur Drehachse 5, zeigen jeweils, dass die Begrenzungsvorrichtung 1 drei Mitnehmer 7 hat, wobei die Mitnehmer 7 im Bereich der Hülsenträgerwandung 3c aufseiten des Einsteckraums 3b angeordnet sind.

Die Mitnehmer 7 kontaktieren den Schneidkopf 4 zur Drehmitnahme, wie Fig. 4 zeigt. Die Mitnehmer 7 sind jeweils als monolithischer und konvexer Abschnitt von der Hülsenträgerwandung 3c ausgebildet, wie Fig. 4 zeigt.

Fig. 4 und Fig. 5 zeigen, dass die Hülsenträgerwandung 3c in Umfangsrichtung bezüglich der Drehachse 5 drei konkav gekrümmte Zentrierabschnitte 8 hat. Fig. 4 zeigt, dass die Zentrierabschnitte 8 den Schneidkopf 4 bezüglich der Drehachse 5 zentrieren.

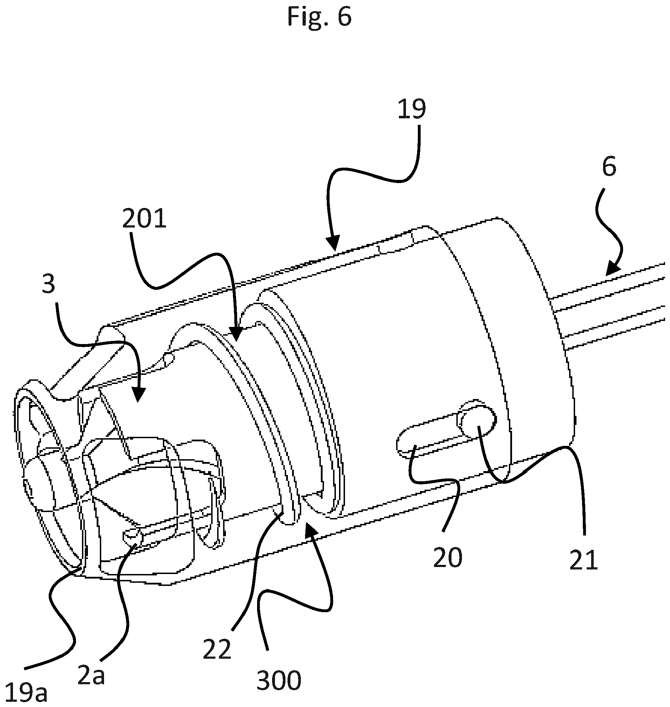

Fig. 6 zeigt am Beispiel von einem Zentrierabschnitt 8 exemplarisch für alle Zentrierabschnitte 8, dass die Zentrierabschnitte 8 jeweils einen veränderlichen radialen Abstand zur Drehachse 5 einhalten, wobei die Hülsenträgerwandung 3c jeweils im Bereich der Zentrierabschnitte 8 zwei Krümmungswendepunkte WP1 und WP2 hat. An jedem Krümmungswendepunkt WP1 und WP2 geht die Hülsenträgerwandung 3c von der durch die Mitnehmer 7 jeweils erzeugten konvexen Krümmung von der Hülsenträgerwandung 3c in die durch die Zentrierabschnitte 8 erzeugte konkave Krümmung von der Hülsenträgerwandung 3c über. In Umfangsrichtung bezüglich der Drehachse 5 verringert sich der zur Drehachse 5 radial bemessene Abstand der Zentrierabschnitte 8 jeweils von RWP1 bei WP1 auf RWP2 bei RWP2. Die solchermaßen ausgeformten Zentrierabschnitte 8 üben jeweils eine bezüglich der Drehachse 5 umfänglich wirkende Klemmkraft auf den Schneidkopf 4 aus; die Zentrierabschnitte 8 sind jeweils in Umfangsrichtung bezüglich der Drehachse 5 gleichermaßen gekrümmt und zur Drehachse 5 radial beabstandet.

Denkbar und auch möglich ist es aber auch, dass der radiale Abstand der Zentrierabschnitte 8 in Umfangsrichtung bezüglich der Drehachse 5 jeweils konstant ist, die Zentrierabschnitt 8 also jeweils gemeinsam auf einem virtuellen Kreis liegen, dessen Zentrum auf der Drehachse 5 liegt.

Fig. 4 zeigt, dass die Zentrierabschnitte 8 und die Mitnehmer 7 in dem Querschnitt gemäß Fig. 4 in Umfangsrichtung bezüglich der Drehachse 5 zueinander alternierend abwechselnd angeordnet sind.

Der Schneidkopf 4 hat in dem Querschnitt gemäß Fig. 4 eine Außenkontur aufseiten der Hülsenträgerwandung 3c, wobei die Außenkontur die Form von einem Dreieck mit geraden Kanten 100 und mit abgerundeten Ecken 200 hat. Jede Ecke 200 kontaktiert jeweils einen Zentrierabschnitt 8 und jede Kante 100 kontaktiert jeweils einen Mitnehmer 8.

Denkbar und auch möglich ist aber auch eine andere Außenkontur von dem Schneidkopf 4, wonach die Kanten 100 gekrümmt sein können.

Die Begrenzungsvorrichtung 1 hat ferner eine Drehlagereinheit 9 und eine der Drehlagereinheit 9 analog aufgebaute weitere Drehlagereinheit 10, wie Fig. 3 zeigt. Die Drehlagereinheiten 9 und 10 haben jeweils einen inneren Lagerring 11, einen äußeren Lagerring 12 und mehrere Wälzkörper 13.

Der Hülsenträger 3 trägt die inneren Lagerringe 11 bezüglich der Drehachse 5 synchron mitdrehbar. Die Anschlagshülse 2 trägt die äußeren Lagerringe 12 bezüglich der Drehachse 5 synchron mitdrehbar. Die Wälzkörper 13 sind jeweils zwischen dem inneren Lagerring 11 und dem äußeren Lagerring 12 angeordnet, wobei die Wälzkörper 13 jeweils den inneren Lagerring 11 und den äußeren Lagerring 13 kontaktieren.

Zwischen den äußeren Lagerringen 12 ist aufseiten der Anschlagshülse 2 ein Distanzring 14 angeordnet, wobei die Anschlagshülse 2 den Distanzring 14 synchron mitdrehbar trägt. Der Distanzring 14 sperrt eine bezüglich der Drehachse 5 axiale Bewegung von den äußeren Lagerringen 14 aufeinander zu.

Der äußere Lagerring 12 von der Drehlagereinheit 9 kontaktiert aufseiten der Anschlagsseite 2a die Anschlagshülse 2, so dass der äußere Lagerring 12 von der Drehlagereinheit 9 von der Anschlagshülse 2 und dem Distanzring 14 bezüglich der Drehachse 5 axial beidseitig eingespannt wird.

Der innere Lagerring 11 von der Drehlagereinheit 10 kontaktiert aufseiten des Wellenvorsprungs 6b einen in das Antriebswellenelement 6 eingelassenen Spannring 15, so dass eine Bewegung von dem inneren Lagerring 11 von der Drehlagereinheit 10 in axialer Richtung bezüglich der Drehachse 5 weg von der Anschlagsseite 2a gesperrt wird.

Der äußere Lagerring 12 von der Drehlagereinheit 10 kontaktiert aufseiten des Wellenvorsprungs 6b einen Lagerdeckel 16 von der Begrenzungsvorrichtung 1, so dass der äußere Lagerring 12 von der Drehlagereinheit 10 von dem Distanzring 14 und dem Lagerdeckel 16 bezüglich der Drehachse 2 axial beidseitig eingespannt wird.

Der Hülsenträger 3 hat zwei Ausrichtbohrungen 17, wie Fig. 3 zeigt. Die Anschlagshülse 2 hat zwei Ausrichtbohrungen 18, wie Fig. 1 zeigt. Die Ausrichtbohrungen 18 unterbrechen die Anschlagshülse 2, so dass die Ausrichtbohrungen 18 jeweils als Durchgangsbohrungen ausgebildet sind.

Die Ausrichtbohrungen 18 können mit den Ausrichtbohrungen 17 unter einer Drehung von der Anschlagshülse 2 bezüglich der Drehachse 5 relativ zum Hülsenträger 3 in Deckung gebracht werden, so dass eine erste Ausrichtbohrung 18 von den Ausrichtbohrungen 18 eine erste Ausrichtbohrung 17 von den Ausrichtbohrungen 17 überdeckt und eine zweite Ausrichtbohrung 18 von den Ausrichtbohrungen 18 eine zweite Ausrichtbohrung 17 von den Ausrichtbohrungen 17 überdeckt. In die solchermaßen ausgerichteten Ausrichtbohrungen 17 und 18 kann ein stimmgabelförmiges Sperrelement eingeführt werden, so dass eine relative Drehung von der Anschlagshülse 2 bezüglich der Drehachse 5 zum Hülsenträger 3 gesperrt ist. In dem solchermaßen gesperrten Zustand von der Begrenzungsvorrichtung 1 kann der Schneidkopf 2 mit dem Gewindekopf 6a besonders einfach verschraubt werden.

Fig. 6 zeigt eine Begrenzungsvorrichtung 300. Die Begrenzungsvorrichtung 300 ist der Begrenzungsvorrichtung 1 analog aufgebaut, so dass für die gleichen Bauteile dieselben Bezugszeichen verwendet werden.

Die Begrenzungsvorrichtung 300 unterscheidet sich von der Begrenzungsvorrichtung 1 dadurch, dass die Begrenzungsvorrichtung 300 eine Führungshülse 19 und eine Feder 22 hat sowie dass die Begrenzungsvorrichtung 300 eine Anschlagshülse 201 hat, die im Unterschied zur Anschlagshülse 2 zwei Zapfen 21 hat, wobei die Zapfen 21 bezüglich der Drehachse 5 jeweils radial nach außen vorspringen; in Fig. 6 wird nur der eine Zapfen 21 von den Zapfen 21 gezeigt.

Die Anschlagshülse 201 ist in die Führungshülse 19 eingesteckt, wobei die Führungshülse 19 mit der Anschlagshülse 201 bezüglich der Drehachse 5 synchron mitdrehbar verbunden ist, indem die Führungshülse 19 zwei Langlöcher 20 hat, die sich entlang der Drehachse 5 erstrecken und in die jeweils ein Zapfen 21 von den Zapfen 21 eingreift.

Die Führungshülse 19 hat aufseiten der Anschlagsseite 2a eine Führungsanschlagsseite 19a und ist bezüglich der Drehachse 5 durch den beschriebenen Eingriff der Zapfen 21 in die Langlöcher 20 relativ zur Anschlagshülse 2 axial verschiebbar geführt gelagert, so dass die Führungshülse 19 von einer Ausgangsposition, die in Fig. 6 dargestellt ist, in eine Endposition geführt verstellbar ist.

In der Endposition befinden sich die Zapfen 21 am gemäß Fig. 6 anderen Ende der Langlöcher 20, so dass die Führungsanschlagsseite 19a in der Endposition mit der Anschlagsseite 2a bündig abschließt.

In der in Fig. 6 gezeigten Ausgangsposition ragt die Führungsanschlagsseite 19a über die Anschlagsseite 2a hinaus.

Die Feder 22, die als Spiralfeder realisiert ist, kontaktiert die Anschlagshülse 201 aufseiten der Zapfen 21 sowie die Führungshülse 19 aufseiten der Führungsanschlagsseite 19a, so dass die Feder 22 in axialer Richtung bezüglich der Drehachse 5 unter der Bewegung der Führungshülse 19a von der Ausgangsposition in die Endposition komprimiert wird. Die Führungshülse 19 steht dadurch unter der Bewegung von der Ausgangsposition in die Endposition unter einer axialen Vorspannung, so dass die Anschlagsseite 2a kontrolliert an die nicht dargestellte Werkstückfläche herangeführt wird.

Die vorliegende Erfindung ist aber nicht auf die in den Figuren 1 bis 5 gezeigte Begrenzungsvorrichtung 1 und die in Fig. 6 gezeigte Begrenzungsvorrichtung 300 beschränkt. Denkbar und auch möglich ist es insbesondere jeweils, dass eine von drei abweichende Anzahl von Schneidkanten 4a vorgesehen ist, die Positionierfläche konkav von der Anschlagsseite 2a weg oder konkav auf die Anschlagsseite 2a zu gekrümmt ist, die Anschlagsseite 2a bezüglich der Drehachse 5 ringförmig geschlossen ist, die Schneidkanten 4a jeweils einen anderen Fasenöffnungswinkel haben und dass eine von der Feder 22 andere Feder vorgesehen ist.

## Patentansprüche

1. Begrenzungsvorrichtung (1, 300) zur Begrenzung einer Eindringtiefe von einem Schneidkopf (4) in ein Werkstück, wobei die Begrenzungsvorrichtung (1, 300) eine Anschlagshülse (2, 201), einen Hülsenträger (3) und einen Schneidkopf (4) hat, wobei die Anschlagshülse (2, 201) eine Anschlagsseite (2a) zum Aufsetzen auf eine Werkstückfläche hat, wobei der Hülsenträger (3) relativ zur Anschlagshülse (2, 201) bezüglich einer Drehachse (5) drehbar gelagert ist, in einer axialen Position bezüglich der Drehachse (5) relativ zur Anschlagshülse (2, 201) fixiert ist und die Anschlagshülse (2, 201) trägt, wobei der Schneidkopf (4) unter einer Schneidkopfdrehung bezüglich der Drehachse (5) mit dem Hülsenträger (3) mitdreht und mindestens eine Schneidkante (4a) hat, wobei die Schneidkante (4a) aufseiten der Anschlagsseite (2a) zum Schneiden außerhalb von der Anschlagshülse (2, 201) angeordnet und ausgebildet ist, wobei der Hülsenträger (3) eine Positionierfläche (3a) hat, wobei die Positionierfläche (3a) quer zur Drehachse (5) aufseiten der Anschlagsseite (2a) angeordnet ist, wobei der Schneidkopf (4) die Positionierfläche (2a) kontaktiert.

2. Begrenzungsvorrichtung (1, 300) nach Anspruch 1, wobei der Hülsenträger (3) einen Einsteckraum (3b) und eine Hülsenträgerwandung (3c) hat, wobei die Hülsenträgerwandung (3c) den Einsteckraum (3b) zumindest abschnittsweise umfänglich bezüglich der Drehachse (5) umgibt, wobei der Schneidkopf (4) abschnittsweise in den Einsteckraum (3b) eingesteckt ist, wobei die Positionierfläche (3a) eine Fläche (3a) von der Hülsenträgerwandung (3c) ist.

3. Begrenzungsvorrichtung (1, 300) nach Anspruch 2, wobei die Positionierfläche (3a) eine Stirnfläche (3a) von der Hülsenträgerwandung (3c) ist.

4. Begrenzungsvorrichtung (1, 300) nach Anspruch 2 oder 3, wobei die Begrenzungsvorrichtung (1, 300) ein Antriebswellenelement (6) hat, wobei das Antriebswellenelement (6) jeweils in den Hülsenträger (3) und den Schneidkopf (4) eingesteckt ist, so dass das Antriebswellenelement (6) den Schneidkopf (4) in die Schneidkopfdrehung versetzen kann, wobei das Antriebswellenelement (6) einen Gewindeabschnitt (6a) hat, wobei der Gewindeabschnitt (6a) mit dem Schneidkopf (4) in einem Gewindeeingriff steht.

5. Begrenzungsvorrichtung (1, 300) nach Anspruch 4, wobei das Antriebswellenelement (6) einen Gewindekopf (6a) aufseiten der Anschlagsseite (2a) hat, wobei der Gewindeabschnitt (6a) im Bereich des Gewindekopfs (6a) ausgebildet ist.

6. Begrenzungsvorrichtung (1, 300) nach einem der vorhergehenden Ansprüche, wobei die Schneidkante (4a) einen ersten bezüglich der Drehachse (5) radial bemessenen Schneidflugkreis hat, wobei der erste Schneidflugkreis außerhalb der Anschlagshülse (2, 201) aufseiten der Anschlagsseite (2a) angeordnet ist, wobei die Schneidkante (4a) einen zweiten bezüglich der Drehachse (5) radial bemessenen Schneidflugkreis hat, wobei der erste Schneidflugkreis kleiner ist als der zweite Schneidflugkreis, wobei der zweite Schneidflugkreis einen parallel zur Drehachse (5) bemessenen Flugkreisabstand (X) zur Positionierfläche hat, wobei die Anschlagsseite einen parallel zur Drehachse (5) bemessenen Anschlagsabstand (X) zur Positionierfläche hat, wobei der Flugkreisabstand von dem zweiten Flugkreis (X) und der Anschlagsabstand (X) gleich groß sind.

7. Begrenzungsvorrichtung (1, 300) nach Anspruch 6, wobei die Schneidkante (4a) zwischen dem ersten Schneidflugkreis und dem zweiten Schneidflugkreis gerade oder gekrümmt verläuft.

8. Begrenzungsvorrichtung (1, 300) nach einem der Ansprüche 2 bis 7, wobei die Begrenzungsvorrichtung (1, 300) mehrere Mitnehmer (7) hat, wobei die Mitnehmer (7) im Bereich der Hülsenträgerwandung (3c) aufseiten des Einsteckraums (3b) angeordnet sind, wobei mindestens zwei Mitnehmer (7) von den Mitnehmern (7) den Schneidkopf (4) zur Drehmitnahme kontaktieren.

9. Begrenzungsvorrichtung (1, 300) nach Anspruch 8, wobei mindestens ein Mitnehmer (7) von den Mitnehmern (7) ein monolithischer Abschnitt von der Hülsenträgerwandung (3c) ist.

10. Begrenzungsvorrichtung (1, 300) nach einem der Ansprüche 8 oder 9, wobei die Hülsenträgerwandung (3c) in Umfangsrichtung bezüglich der Drehachse (5) mehrere konkav gekrümmte Zentrierabschnitte (8) hat, wobei mindestens zwei Zentrierabschnitte (8) von den Zentrierabschnitten (8) den Schneidkopf (4) bezüglich der Drehachse (5) zentrieren.

11. Begrenzungsvorrichtung (1, 300) nach Anspruch 10, wobei die Zentrierabschnitte (8) und die Mitnehmer (7) in einem Querschnitt senkrecht zur Drehachse (5) in Umfangsrichtung bezüglich der Drehachse (5) zueinander alternierend abwechselnd angeordnet sind.

12. Begrenzungsvorrichtung (1, 300) nach Anspruch 11, wobei mindestens drei Mitnehmer (7) von den Mitnehmern (7) und mindestens drei Zentrierabschnitte (8) von den Zentrierabschnitten (8) vorgesehen sind, wobei der Schneidkopf (4) in dem Querschnitt eine Außenkontur aufseiten der Hülsenträgerwandung (3c) hat, wobei die Außenkontur die Form von einem Dreieck mit geraden Kanten (100) und mit abgerundeten Ecken (200) hat, wobei jede Ecke (200) von den Ecken (200) jeweils einen Zentrierabschnitt (8) von den Zentrierabschnitten (8) kontaktiert, wobei jede Kante (100) von den Kanten (100) jeweils einen Mitnehmer (7) von den Mitnehmern (7) kontaktiert.

13. Begrenzungsvorrichtung (1, 300) nach einem der Ansprüche 4 bis 12, wobei das Antriebwellenelement (6) einen bezüglich der Drehachse (5) radial vorspringenden Wellenvorsprung (6a) hat, wobei der Hülsenträger (3) zwischen dem Schneidkopf (4) und dem Wellenvorsprung (6a) angeordnet ist, wobei der Hülsenträger (3) den Wellenvorsprung (6a) unter einer durch den Schneidkopf (4) aufgebrachten axialen Vorspannung kontaktiert.

14. Begrenzungsvorrichtung (1, 300) nach einem der vorhergehenden Ansprüche, wobei die Begrenzungsvorrichtung (1, 300) eine Drehlagereinheit (9, 10) hat, wobei die Drehlagereinheit (9, 10) einen inneren Lagerring (11), einen äußeren Lagerring (12) und mehrere Wälzkörper (13) hat, wobei der Hülsenträger (3) den inneren Lagerring (11) bezüglich der Drehachse (5) synchron mitdrehbar trägt, wobei die Anschlagshülse (2, 201) den äußeren Lagerring (12) bezüglich der Drehachse (5) synchron mitdrehbar trägt, wobei die Wälzkörper (13) zwischen dem inneren Lagerring (11) und dem äußeren Lagerring (12) angeordnet sind, wobei die Wälzkörper (13) jeweils den inneren Lagerring (11) und den äußeren Lagerring (12) kontaktieren.

15. Begrenzungsvorrichtung (1, 300) nach einem der vorhergehenden Ansprüche, wobei die Begrenzungsvorrichtung (1, 300) eine Führungshülse (19) hat, wobei die Anschlagshülse (3) in die Führungshülse (19) eingesteckt ist, wobei die Führungshülse (19) mit der Anschlagshülse (3) bezüglich der Drehachse (5) synchron mitdrehbar verbunden ist, wobei die Führungshülse (19) aufseiten der Anschlagsseite (2a) eine Führungsanschlagsseite (19a) hat, wobei die Führungshülse (19) bezüglich der Drehachse (5) relativ zur Anschlagshülse (2, 201) axial verschiebbar gelagert ist, so dass die Führungshülse (19) von einer Ausgangsposition in eine Endposition verstellbar ist, wobei die Führungsanschlagsseite (19a) in der Ausgangsposition in axialer Richtung bezüglich der Drehachse (5) über die Anschlagsseite (2a) hinausragt, wobei die Führungsanschlagsseite (19a) in der Endposition mit der Anschlagsseite (2a) zumindest abschnittsweise bündig abschließt, wobei die Führungshülse (19) unter einer Bewegung von der Ausgangsposition in die Endposition unter einer axialen Vorspannung steht.
